# EUROPEAN PATENT APPLICATION

(11) **EP 1 348 471 A2**
(43) Date of publication of application: **01.10.2003**
(21) Application number: 03250179.3
(22) Date of filing: 13.01.2003
(51) Int. Cl.: A63F 13/10

(54) **Game apparatus and storage medium for carrying program therefor**

(30) Priority: 18.01.2002 JP 2002009995
(71) Applicant: Konami Corporation, Chiyoda-ku, Tokyo (JP)
(72) Inventor: Nakayama, Hiroyuki, Konami Comp. Ent. Studios Inc., Tokyo (JP)
(74) Representative: Haley, Stephen

(57) **Abstract**

A plurality of mobile bodies (27) such as bicycles move on a virtual field, and an image and a commentary voice during this movement are reproduced. A running commentary of the moving condition of the mobile bodies is composed of two modes: a normal commentary mode and a specific commentary mode. In the normal commentary mode, an image and a commentary voice are reproduced by a predetermined method. In the specific commentary mode, an image and a commentary voice centered on a specific mobile body of the mobile bodies are created and reproduced. A user can select the specific commentary mode to watch the running commentary directed to the specific mobile body.

## Description

The present invention relates to a horse racing game. Particularly, the present invention relates to a method of reproducing a running commentary during a race in the game.

There is known a horse racing game in which a user becomes a horse owner or the like and raises racehorses. Such a horse racing game has a race mode in which a racehorse raised by the user runs the race. In the race mode, a plurality of horses including the horse owned by the user race with each other and the running commentary on the race is performed. Namely, pictures of the horses running on the racetrack in the race are displayed on a display screen of a game system, and the running commentary or the like that announces the state of the race is reproduced from a speaker or the like of the game system. During the reproduction of the race, the user can watch how the racehorse of the user runs in a race.

In the horse racing game of the above type, the running commentary in the race mode is carried out similarly to that in a real horse racing. Namely, for a while after the race starts, the display screen and the announce voices in the race are reproduced to summarize the order and the positions of the respective horses. Then, when the race progresses and the horses approach the goal, the display screen and the announce voice for the leading horse or the horses in the top group are mainly reproduced.

However, the user who is a owner of the horse and entered the horse in the race is not interested in the race results of the other horses so much, and is generally more interested in the state in the race and the race result of his own horse than the result of the other horses . Namely, the user wants to know where the user's horse is running, and whether the horse is moving up to the front position or getting behind the other horses.

In a running commentary on the race in a conventional horse racing game, only the horses in the front group are always subject to the display and announce, particularly at the goal scene which the user is most interested in. Therefore, there is a problem that the user cannot know the state of his or her own horse in the race unless the user's horse is in the front group.

The present invention is devised in order to solve the above problem, and it is an object of the present invention to provide a horse racing game apparatus and a program for the game, in which a user can watch and hear the running commentary centered on a specific mobile body, such as a race horse which owned and entered in the race by the user, if the user desires.

According to one aspect of the present invention, there is provided a game apparatus which moves a plurality of mobile bodies on a virtual field, displays an image according to a state of the mobile bodies on a screen of a display device, and outputs commentary voice according to the image, including: a normal display output device for displaying the image according to the state and outputting the commentary voice according to the state; a specific display output device for displaying the image centered on a specific mobile body in the plural mobile bodies and outputting the commentary voice associated with the specific mobile body; and a switching control device for selectively controlling one of the normal display output device and the specific display output device to function based on a user's input.

Here, as an example of "displaying the image according to the state and outputting the commentary voice according to the state", for example, in the case of a horse racing game or a bicycle racing game in a town, a display image and the commentary voice of the race are reproduced so that summaries such as the positions of racehorses or bicycles in the race become clear for a while after the race starts, and when the advancing racehorses or bicycles approach the goal, the display image and the commentary voice mainly directed to the leading racehorse orbicycle or racehorses or bicycles in a front group are output. Moreover, the specific mobile body may be a racehorse which is a character on the game specified by user or a bicycle on which a player rides in the game, for example.

According to the above aspect, a plurality of mobile bodies are moved on the virtual field, and the image according to the state is displayed and the commentary voice according to the image is output. The image is displayed and the commentary voice is output during the game in such a manner that the switching between the normal display output device and the specific display output device is executed by the user's input. The normal display output device displays the image according to the state, and outputs the commentary voice according to the state. The specific display output device mainly displays the image centered on the specific mobile body of the plural mobile bodies, and outputs the commentary voice associated with the mobile body. Therefore, the user can watch the image mainly directed to the specific mobile body, such as a racehorse or a bicycle on which a bicyclist rides, selected by the user or hear the commentary voice.

The image may be taken by a virtual camera provided on the virtual field, and the specific display output device may set the virtual camera so that the specific mobile body comes to a center, and an image of the virtual camera at that time is displayed as the image.

In this case, the image captured by the virtual camera provided within the virtual field is displayed as the image according to the state of the mobile bodies. Moreover, the specific display output device sets the virtual camera so that the specific mobile body comes to the center, and uses the image of the virtual camera at that time as the image according to the state of the mobile body. As a result, the user can instructs the specific display outputs to display the specific mobile body such as the bicycle on which the bicyclist rides specified by the user at the center of the image and to observe the specific mobile body of interest deliberately.

In an embodiment, when the switching is made by the user's input, the specific display output device may judge a positional relationship between a mobile body at the center of the image of the virtual camera and the specific mobile body and may change the image of the virtual camera based on a judged result so that the specific mobile body is positioned at the center. By this, the specific mobile body is displayed at the center of the image. As a result, the user can allow the specific mobile body to be displayed at the center of the image at arbitrary timing.

The specific display output device may output a message instructing the virtual camera to direct its visual field towards the specific mobile body as the commentary voice, when the judged result indicates that the specific mobile body is not included in the image of the virtual camera. As a result, when the specific mobile body is not included in the image, since the commentary voice which instructs the virtual camera to capture the specific mobile body is output, the user who watches the image can feel real excitement.

In a preferred embodiment, the specific mobile body may be a mobile body which is selected by the user from the plurality of mobile bodies. Therefore, the user can select the mobile body of interest as the specific mobile body, so that the image and the commentary voice associated with the state of the specific mobile body can be mainly output.

According to another aspect of the present invention, there is provided a game apparatus which executes a race using a plurality of mobile bodies on a virtual course, displays a race image according to a progressing state on a screen of a display device, and outputs commentary voice according to the race image, including: a normal display output device for displaying the race image according to the progressing state and outputting the commentary voice according to the progressing state; a specific display output device for displaying the race image centered on a specific mobile body in the plural mobile bodies and outputting the commentary voice associated with the specific mobile body; and a switching control device for selectively controlling one of the normal display output device and the specific display output device to function based on a user's input.

According to the above game apparatus, the race is executed on the virtual course by using a plurality of mobile bodies, and the race image according to the progressing state is displayed on the display screen and the commentary voice according to the race image is output. Here, "the race using a plurality of mobile bodies on the virtual course" may be a race in a race course in the horse racing game, for example. Accordingly, the user can mainly watch the race image of the specific mobile body such as a horse specified by the user and hear the commentary voice.

According to still another aspect of the present invention, there is provided a storage medium carrying a computer program executed by a computer to function as a game apparatus which moves a plurality of mobile bodies on a virtual field, displays an image according to a state of the mobile bodies on a screen of a display device, and outputs commentary voice according to the image, including: a normal display output device for displaying the image according to the state and outputting the commentary voice according to the state; a specific display output device for displaying the image centered on a specific mobile body in the plural mobile bodies and outputting the commentary voice associated with the specific mobile body; and a switching control device for selectively controlling one of the normal display output device and the specific display output device to function based on a user's input.

According to still another aspect of the present invention, there is provided a storage medium carrying a computer program executed by a computer to function as a game apparatus which executes a race using a plurality of mobile bodies on a virtual course, displays a race image according to a progressing state on a screen of a display device, and outputs commentary voice according to the race image, including: a normal display output device for displaying the race image according to the progressing state and outputting the commentary voice according to the progressing state; a specific display output device for displaying the race image centered on a specific mobile body in the plural mobile bodies and outputting the commentary voice associated with the specific mobile body; and a switching control device for selectively controlling one of the normal display output device and the specific display output device to function based on a user's input.

According to the above aspect of the present invention, the program is read out from the storage medium and executed by the computer so that the computer can function as a game apparatus of the present invention. Moreover, the above-mentioned respective forms of the game apparatus can be applied to the program.

The nature, utility, and further features of this invention will be more clearly apparent from the following detailed description with respect to preferred embodiment of the invention when read in conjunction with the accompanying drawings briefly described below.

In the Drawings;
Fig. 1 is a block diagram of a control system of a horse racing game apparatus to which the present invention is applied.
Fig. 2 is a diagram showing a display image example of a live scene of a race in the horse racing game shown in Fig. 1.
Figs. 3A, 3B and 3C are diagrams showing standard time, standard speed and standard speed diagram which are necessary for a horse position determining process.
Figs. 4A and 4B are diagrams showing a horse position determining process supplemental parameter and a standard running route which are necessary for the horse position determining process.
Fig. 5 is a diagram showing a relationship between positions of horses in a race course and a visual field of a virtual camera.
Fig. 6 is a diagram showing an example of commentary voice data table to be used in a normal commentary mode.
Fig. 7 is a diagram showing an example of commentary voice data table to be used in a specific horse commentary mode.
Figs. 8A to 8F are diagrams showing examples of a race image in the specific horse commentary mode.
Fig. 9 is a flowchart of a race commentary process.
Fig. 10 is a functional block diagram of the game apparatus of the present invention.

The preferred embodiments of the present invention will now be described below with reference to the attached drawings.

### [Configuration of game system]

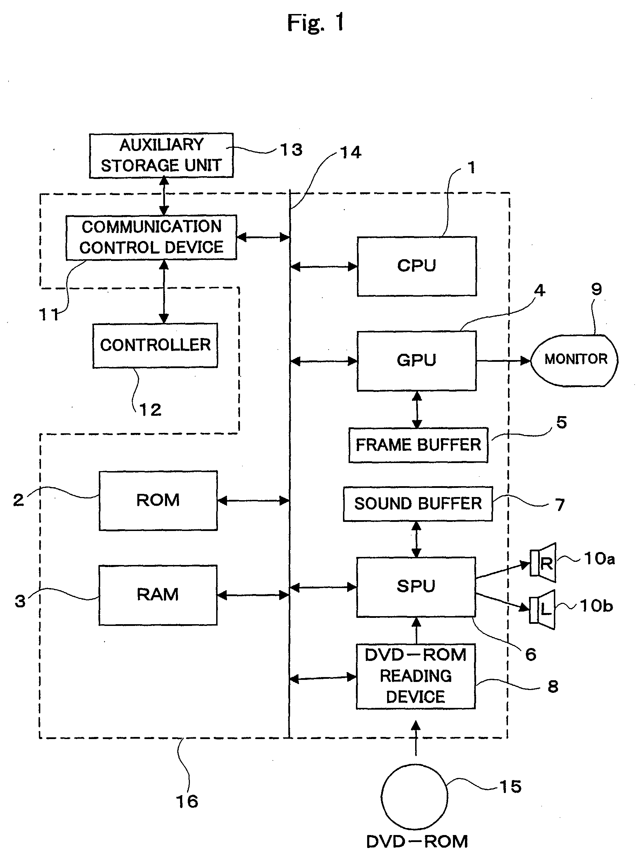

Fig. 1 is a block diagram of a control system of a home-use horse racing game apparatus to which the present invention is applied. The home-use horse racing game apparatus executes a predetermined game according to a game program recorded on a DVD-ROM 15 serving as a storage medium.

The game apparatus includes a monitor 9, speakers 10a and 10b, a controller 12, an auxiliary storage device 13, the DVD-ROM 15 and a game machine main body 16. Generally, a home TV receiver is used as the monitor 9, and the built-in speakers of the TV receiver are used as the speakers 10a and 10b. The speakers are the two-channel speakers having a right channel speaker 10a and a left channel speaker 10b. The controller 12 serves as an input device and is provided with operation members which are manipulated by a player.

The auxiliary storage device 13 is a storage medium for storing data relating to a game progressing state, anda semiconductor memory, for example, can be used. Programs and data which are necessary for executing the game are recorded on the DVD-ROM 15, but the details of them will be described later. Instead of the DVD-ROM 15, various storage media such as a CD-ROM and a semiconductor memory may be used.

The game machine main body 16 has a CPU 1 mainly composed of a microprocessor, a ROM 2 and a RAM 3 serving as main storage devices for the CPU 1, a graphics processing unit (GPU) 4 for image processing, a sound processing unit (SPU) 6 for sound processing, buffers 5 and 7 for these processing units 4 and 6, and a DVD-ROM reading device 8. The operating system serving as a program necessary for controlling plural operations of the game machine is stored in the ROM 2. Programs and data for game read from the DVD-ROM 15 serving as the storage medium are written into the RAM 3 when necessary.

The GPU 4 receives image data from the CPU 1 and draws a game image on the frame buffer 5, converts the drawn image into a predetermined video reproducing signal, and outputs the signal to the monitor 9 at predetermined timing. The SPU 6 reproduces data such as sound and music as well as sound source data and the like, which are read out from the DVD-ROM 15 and stored in the sound buffer 7, so as to output them from the speakers.

The DVD-ROM reading device 8 reads the programs and data recorded on the DVD-ROM 15 according to an instruction from the CPU 1 and outputs a signal corresponding to the read-out content.

The CPU 1 is connected to a communication control device 11 via a bus 14, and the controller 12 and the auxiliary storage device 13 are detachably connected to the communication control device 11. The communication control device 11 scans an operating state of the operation members of the controller 12 with a constant period (for example, 1/60 sec.), and outputs a signal corresponding to the scanning result to the CPU 1. The CPU 1 discriminates the operating state of the controller 12 based on the signal. It is noted that a plurality of controllers 12 and the auxiliary storage devices 13 can be connected with the communication control device 11 in parallel.

### [Horse racing game]

Next, an example in which the present invention is applied to the horse racing game will be described below. The horse racing game roughly includes a horse-owner mode, a stable mode and a race mode. During the progress of the game, a player operates the controller 12 to select one of the three modes and advances the game. In the three modes, the race mode is a mode in which racehorses runs an actual race, and a paddock and a state of entry into a racing track at the race day are displayed and the actual races are performed. When the race is ended, the result of each race is announced, and the results of all the horses in the race belonging to the player's stable are obtained. The present invention particularly relates to reproduction of a running commentary on a race in the race mode.

### (Race screen)

Next, the image of a race in the horse racing game system according to the present invention will be described.

Several kinds of race courses are stored in the DVD-ROM 15 in which the horse racing game has been stored. Each course is set onavirtual coordinate system. Further, several virtual cameras are provided at predetermined positions in the courses, and the positions of the virtual cameras are stored as coordinate data in the coordinate system.

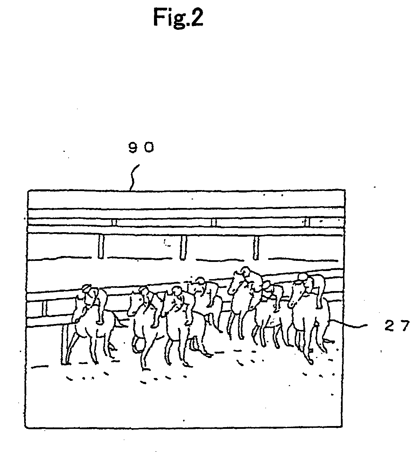

Fig. 2 shows a display screen example during the race in the race mode. Fig. 2 shows one example of a display screen 90 which is displayed based on a visual field of a certain virtual camera, and the image in the display screen 90 changes according to an angle (direction) of the virtual camera and the zoom function. Further, since normally the display screen mainly shows a horse 27 in the race, the virtual camera is switched to the one which is the most suitable to display the specific horse 27 or a group to which the horse 27 belongs, out of the several virtual cameras provided in the course, according to movements of the horse 27.

### (Determination of horse position)

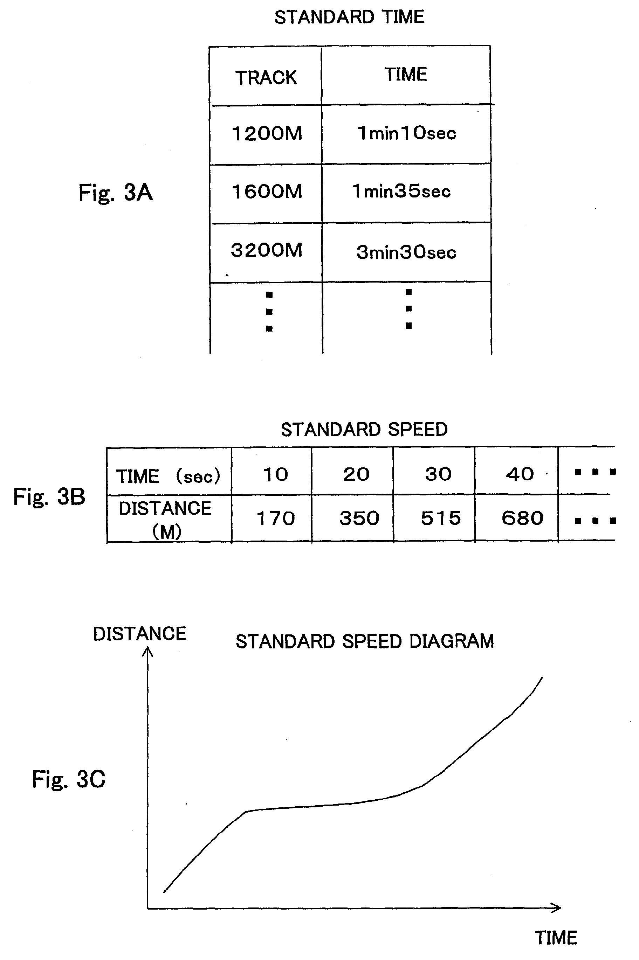

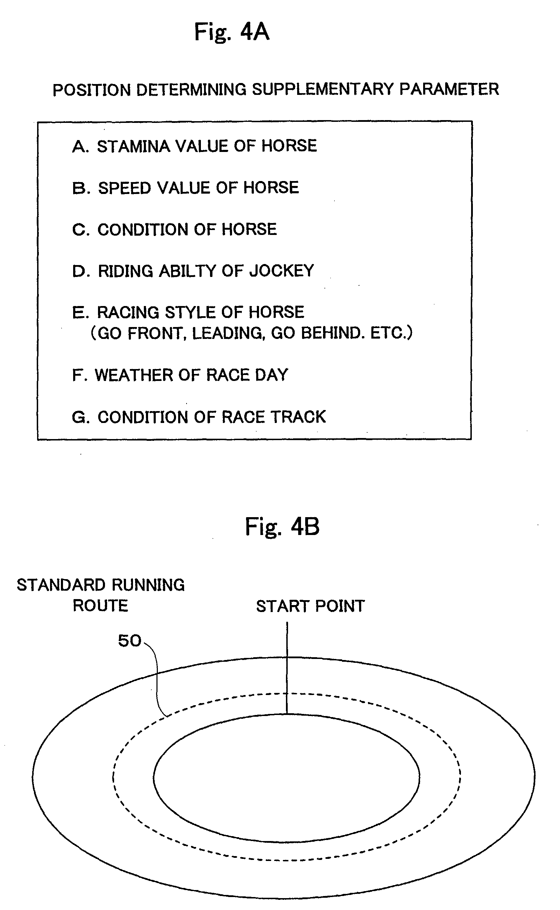

Next, the determination of a horse position in the race will be described with reference to Figs. 3 and 4. The positions of horses are determined by an arithmetic operation based on speeds of the respective horses, the running route on a predetermined course and the like. This determining process is executed in such a manner that the CPU 1 executes a predetermined arithmetic program.

As show in Figs. 3A and 3B, standard time and standard speed of a horse in a predetermined course are stored based on actual time and speed of horse. An example of the standard speed diagram which is calculated based on the standard time and the standard speed is shown in Fig. 3C. In the standard speed diagram, the distance is plotted along the vertical axis and the time is plotted along the horizontal axis. The diagram shows how long a horse advances after the horse started.

The speed diagrams of the respective horses can be obtained by correcting the standard speed diagram according to position determining supplemental parameters set for the respective horses. As exemplified in Fig. 4A, the horse position determining supplementary parameters may include a stamina value of the horse, a speed value of the horse, a condition of the horse and the like. Concretely, in the case of a horse with high stamina value, the running speed rises near the goal, and in the case of a horse with low stamina value, as the time passes, the running speed drops. The position determining supplemental parameters hold detailed information of the respective horses, and the standard speed diagram is corrected based on the position determining supplementary parameters, with certain randomness added if necessary. As a result, the speed diagrams which are peculiar to the respective horses are created.

Further, the speed diagrams which are peculiar to the respective horses are applied to a standard running route in a predetermined course to determine the positions of the horses. In Fig. 4B, a standard running route 50 shown by a dotted line is previously set for all race courses stored in the game system. The positions of the horses at specific time after the start are calculated based on the standard running route 50 in the predetermined course and the speed diagrams peculiar to the respective horses. The determined horse positions are always managed as coordinate data. Thus, the game system always holds the coordinate data about the horse positions at respective time after the race is started. Since the position calculating method is well known, further detailed explanation will be omitted. Moreover, the above horse position calculating method is merely one example, and the present invention can be applied to a game system in which horse positions are calculated by another method.

### (Functional block)

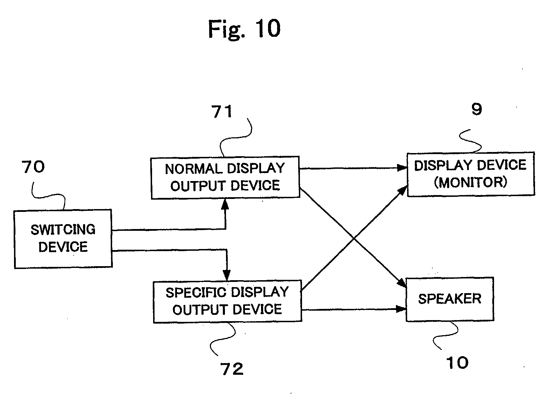

Fig. 10 shows a functional block diagram of the game of the present invention. The respective functions shown in Fig. 10 are realized by the CPU 1 which executes the programs recorded in the DVD-ROM 15 and controls the components such as the SPU 6 if necessary.

In Fig. 10, a race is carried out on a virtual course by a plurality of mobile bodies such as horses, and a race image according to the progressing state is displayed on the display device 9 (such as the monitor 9), and commentary voice according to the race progressing state is output from the speakers 10. Here, a normal display output device 71 controls the monitor 9 and the speaker 10 so that the race image according to the progressing state is displayed and the commentary voice according to the progressing state is output. Moreover, a specific display output device 72 controls the monitor 9 and the speaker 10 so that the race image mainly centered on one specific mobile body in the plural mobile bodies is displayed and the commentary voice directed to the specific mobile body is output. A switching control device 70 executes switchingbetween the normal display output device 71 and the specific display output device 72 according to the input by a user. The normal display output device 71 realizes a normal commentary mode mentioned below, and the specific display output device 72 realizes a specific horse commentary mode mentioned below.

### (Race commentary process)

The present invention is characteristic in that the commentary process of a race is executed by two modes: the normal commentary mode and the specific horse commentary mode. The normal commentary mode is a mode for providing a running commentary similar to that of a real horse racing, and the commentary is provided in a preset form, i.e., race images are displayed and the voice of the announcer is reproduced. Concretely, for example, the front horse through the rear horse in the group of horses are successively displayed for predetermined time after the race starts so that the state of the entire horse group is explained, and the race images and the commentary voice directed to the leading horse or the horses in the front group are reproduced from near the third corner to the goal position.

On the other hand, the specific horse commentary mode is a mode peculiar to the present invention for providing a commentary centered on a specific horse which runs in the race, and the race images and the commentary voice directed to the specific horse are reproduced. Typically, "the specific horse" in the specific horse commentary mode may be a horse which is owned and entered in the race by the user playing the horse racing game (normally, the horse owner or the trainer).

The horse racing game apparatus of the present invention is constituted such that the user can switch these two modes during the race. Namely, when the race starts in the race mode, first the commentary process is executed in the normal commentary mode. When the user wants to see the state of his horse running during the race, for example, the user pushes a button on the controller 12 to switch the commentary mode from the normal commentary mode to the specific horse commentary mode.

For a period in which the commentary mode can be switched, the game apparatus may be designed such that the commentary mode can be switched anytime after the start of the race to the end of the race, or this period may be limited to only a specific period during the race such as the ending period of the race (for example, from the third corner to the goal position) . Generally in the normal commentary mode, the race image and commentary voice are directed to almost all horses until the middle period of the race, but the race image and the commentary voice are directed to the leading horse or the horses in the front group at the ending period of the race. Therefore, if the horse owned by the user is not in the front group, the user can select the specific horse commentary mode at least at the ending period of the race to see the state of his horse.

Next, a display method of the race images in the commentary mode will be described. The basic idea for the display of the race image is common in the normal commentary mode and in the specific horse commentary mode. In the game, the course data of some race courses where races are carried out are prepared. The positions in the course where horses run are set on a virtual coordinate system as mentioned above, and the positions of virtual cameras are set at plural positions according to the shape of the course.

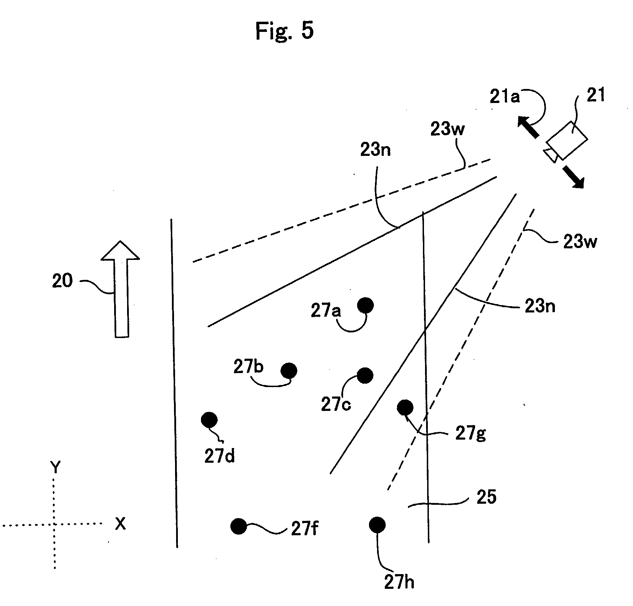

Fig. 5 shows a relationship between the position of the virtual camera and the positions of the horses on the virtual course. In Fig. 5, the virtual camera 21 is provided at a predetermined position outside the course 25. The race images are created as image data including horses within the visual field range of the virtual camera 21. On the coordinate system which defines the course, the position of the virtual camera 21 is fixed, but its direction and viewing angle are variable. Namely, the direction of the virtual camera 21 can move right and left by a predetermined angle as shown by an arrow 21a, and the viewing angle of the virtual camera 21 is changeable between a wide angle 23w and an narrow angle 23n by the zoom function.

In Fig. 5, a plurality of black points shown in the course 25 correspond to the positions of the respective horses, and they advance in a direction shown by the arrow 20. As mentioned above, the positions of the horses in the race are sequentially calculated as the coordinate data on the coordinate system corresponding to the course, and the positions of the horses move on the course as the race progresses. In the example of Fig. 5, the virtual camera 21 is set in the narrow viewing angle 23n shown by a solid line, and is creating the race image centered on the horse 27a running the leading position in the horse advancing direction 20. Therefore, the horses 27a through 27f within the viewing angle 23n are included in the race image, but the horses 27g and 27h outside of the viewing angle 23n are not included in the race image.

The race image data are created by superimposing the images of the individual horses on a background image prepared in advance. The background image is prepared as image data which are obtained when the virtual camera 21 changes its direction according to the movement of the horses (as shown by an arrow 21a) . The image data of the individual horses are superimposed on the background image data. The positions of the image data of the individual horses on the background image are determined based on the position coordinate of the virtual camera 21 and the position coordinates of the horses in the coordinate system shown in Fig. 5, and the image data of the horses are superimposed at the positions thus determined. In addition, the distances between the positions of the horses and the position of the virtual camera are calculated based on the position coordinate of the virtual camera 21 and the position coordinates of the horses, so that display sizes of the image data of the horses on the background image and the like are determined. Thus, the race image including the horses within the viewing angle of the virtual camera 21 is created.

In the normal commentary mode, the determination is previously made as to which race image is displayed at which point of time during the race. For example, around the goal, the race image centered on the leading horse or the horses in the front group is created. On the contrary, in the specific horse commentary mode, the race image centered on the specific horse is created. The specific horse is determined before the race commentary process is started. Normally, a horse which is owned and entered in the race by the user is set to the specific horse.

It is noted that the background image data and the image data of the respective horses are previously stored in the DVD-ROM 15 and are transferred to the RAM 3 of the game system and used when necessary.

Next, there will be explained below the method of reproducing the commentary voice in the commentary mode. The commentary voice is output by reproducing commentary voice data corresponding to speech voice of a play-by-play announcer.

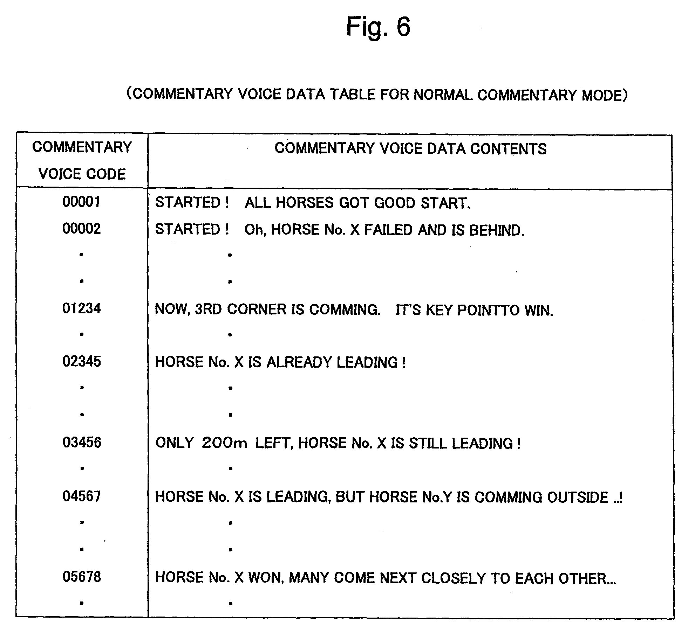

Fig. 6 shows an example of a table which prescribes the commentary voice data to be used in the normal commentary mode. As shown, a plurality of the commentary voice data are prepared in correspondence with the commentary voice codes. The commentary voice codes are associated with elements indicating the race progressing state such as the elapsed time after the race starts or a position of the leading horse in the race (for example, a running distance after the start) in the normal commentary mode. For example, if the commentary voice codes are associated with the elapsed time after the start, the output timings of the respective commentary voice data are preset, and the commentary voice data are reproduced according to the passage of time. When a plurality of commentary voice data are prepared for the same elapsed time, one of them is selectively reproduced.

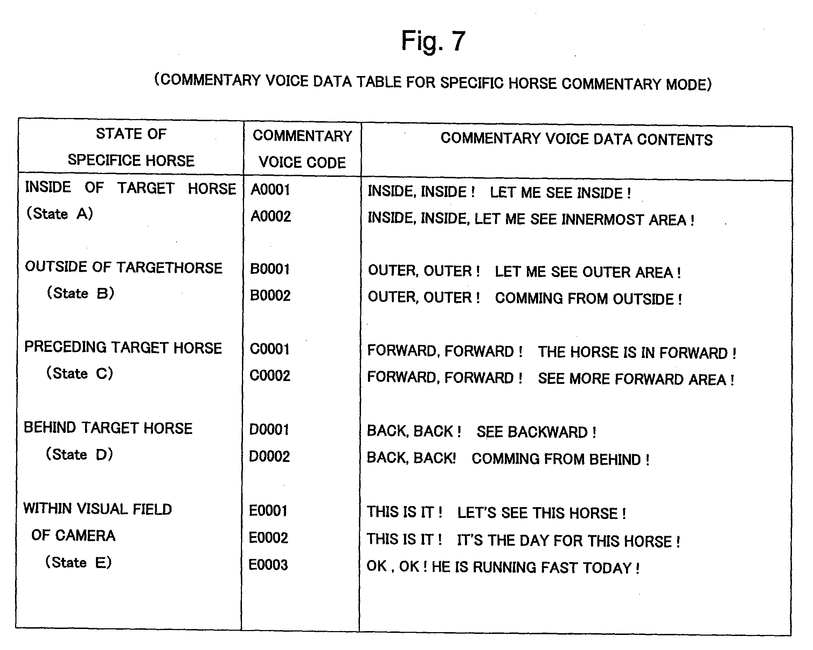

On the other hand, in the specific horse commentary mode, the commentary voice data are selected and reproduced based on the position of the specific horse or a positional relationship between a target horse of the virtual camera (normally a leading horse in the horse group or a horse at the center of the group, and hereinafter referred to as "target horse") and the specific horse. Fig. 7 shows a table of the commentary voice data to be used in the specific horse commentary mode.

In the specific horse commentary mode, first the positional relationship between the target horse and the specific horse is determined in each point of time after the mode is switched. This is carried out by calculating a position coordinate of the target horse and the position coordinate of the specific horse.

Concretely, a judgment is firstly made as to whether the specific horse is within the visual field of the virtual camera. When the specific horse is within the visual field of the virtual camera, a state of the specific horse in the Table of Fig. 7 is "within visual field of virtual camera (State E)".

When the specific horse is not within the visual field of the virtual camera, a judgment is made based on the position coordinates of the respective horses obtained by calculation as to whether the specific horse is inside or outside of the target horse on the course. When the specific horse is inside of the target horse, the state of the specific horse is "inside of target horse (State A)", and when the specific horse is outside of the target horse, the state of the specific horse is "outside of target horse (State B)".

In addition, the leading horse through the last horse are placed in the orderbased on the position coordinates of the respective horses obtained by calculation, and a judgment is made as to whether the specific horse is preceding the target horse or behind the target horse. When the specific horse is preceding the target horse, the state of the specific horse is "preceding target horse (State C)", and when the specific horse is behind the target horse, the state of the specific horse is "behind target horse (State D)".

Then, the corresponding commentary voice data are selected and reproduced according to the state of the specific horse thus determined. When a plurality of commentary voice data are prepared for the same state of the specific horse, one of them can be selected and reproduced with taking still another condition into consideration or randomly.

Next, there will be explained below one example of the reproduction of the race image and the commentary voice in the specific horse commentary mode. Now, it is assumed that, in the specific horse commentary mode, the specific horse is running alongside and outside of the target horse on the course, but since the virtual camera is displaying the image with narrow angle, the specific horse is not included in the race image.

In this case, since the specific horse is out of the visual field of the virtual camera and is outside of the target horse in the widthwise direction of the course, and the two horses are aligned in the advancing direction of the course, the state of the specific horse is judged as "outside of target horse (state B)". Therefore, for example, the commentary voice data "Outer, outer! Let me see outer area !" is reproduced based on the table shown in Fig. 7. Also, the visual field of the virtual camera is gradually changed to the right direction of the target horse 40 based on the judged result of the state of the specific horse, and eventually the specific horse enters the race image.

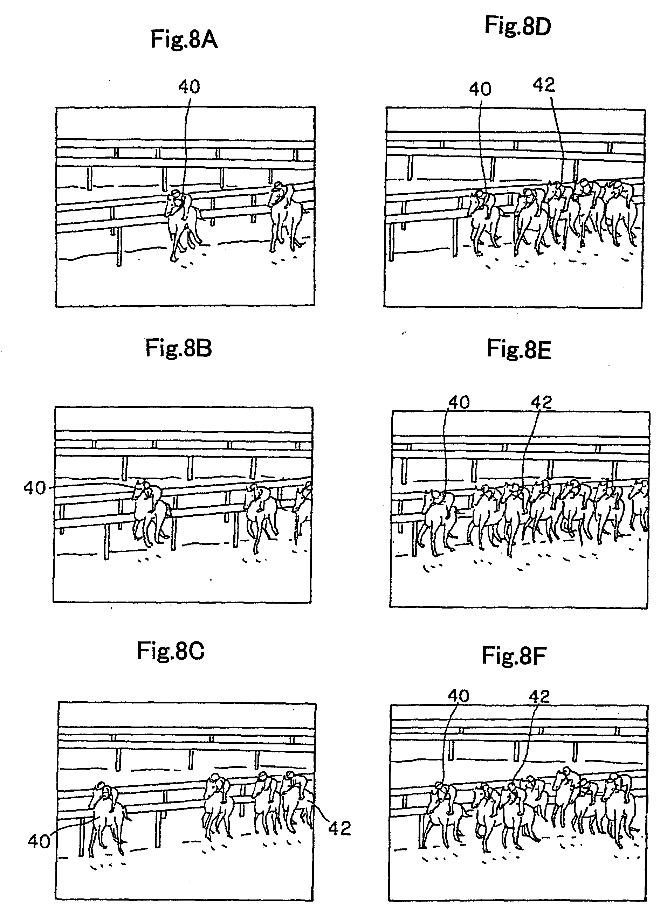

In another example, it is assumed that, in the specific horse commentary mode, the specific horse is running behind the target horse on the course and is not included in the race image. The example of the race image at that time is shown in Fig. 8A. The target horse 40 is displayed approximately at the center of the race image, but the specific horse is not shown in the race image.

In this case, since the specific horse is out of the visual field of the virtual camera and is positioned behind the target horse, the state of the specific horse is judged as "behind target horse (state D)". Therefore, for example, the commentary voice data "Rearward, rearward! Coming from behind !" is reproduced based on the table shown in Fig. 7. In addition, the visual field of the virtual camera is changed gradually to the rear direction and the right direction of the target horse 40 based on the judged results of the state of the specific horse, and the race image is changed from Fig. 8A to 8C in this order. At the time when the race image of Fig. 8C is displayed, the specific horse 42 comes into the race image. When the specific horse 42 thus enters the visual field of the virtual camera, the state of the specific horse is changed to the state "within visual field of virtual camera (State E), and as shown in Fig. 7 for example, "This is it! It's the day of this horse !" is reproduced.

Thereafter, the virtual camera sets the specific horse 42 as the target horse, and continues to display the specific horse 42 at the center of the race image. In addition, the state of the specific horse is constantly kept to be "within visual field of virtual camera (State E)", and the corresponding commentary voice data is reproduced when necessary.

As described above, according to the present invention, the normal commentary mode and the specific horse commentary mode are prepared as the commentary modes during the race, and the specific horse commentary mode can be selected by a user. In the specific horse commentary mode, the race image centered on the specific horse is displayed and the commentary voice data mainly directed to the specific horse is reproduced. Therefore, a user can select the specific horse commentary mode during the race to see the image and hear the commentary voice of the state of the horse which is owned and entered in the race by the user.

Further, at the time when the user selects the specific horse commentary mode, a horse other than the specific horse is normally set as the target horse, and thus the specific horse is not included in the race image. Thereafter, the race image changes so as to find the specific horse according to the positional relationship on the course between the target horse at that time and the specific horse, and the commentary voice is reproduced. Therefore, the user can know the position of the specific horse in the horse group.

Still further, the game apparatus may be designed such that it takes a certain time until the specific horse is actually displayed at the center of the race image after the user selects the specific horse commentary mode, i.e., the specific horse is not displayed immediately after the mode is switched to the specific horse commentary mode. In that case, since the race image is changed such that the virtual camera looks for the specific horse in the horse group, the user can enjoy finding the horse running in the race and can have exciting feeling in looking for the position and watching the state of the horse entered by the user. Thus, the enjoyment in watching the race in the race mode is increased.

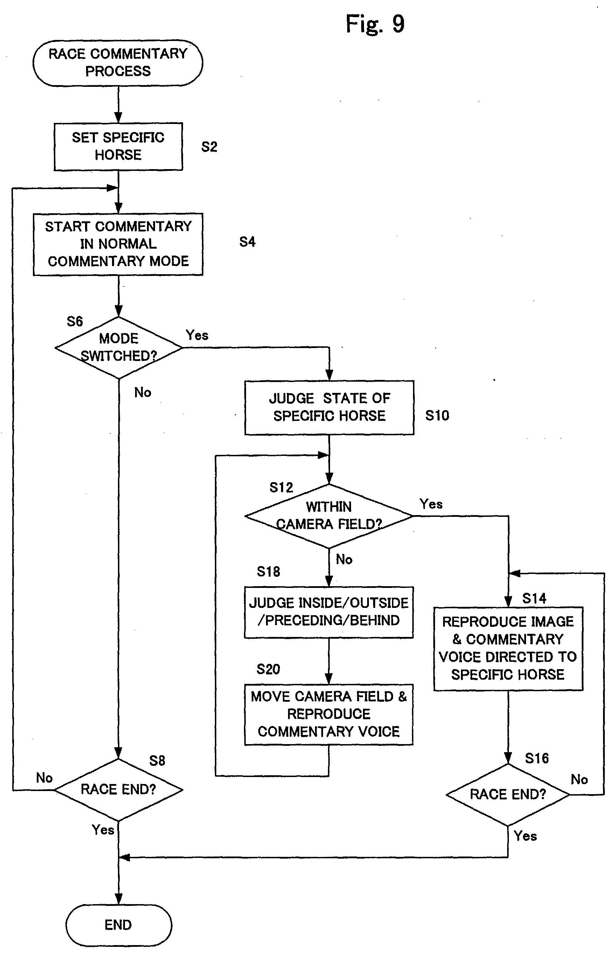

Next, the race commentary process using the above-mentioned two modes will be described with reference to Fig. 9. Fig. 9 is a flowchart of the race commentary process. It is noted that this process is realized by the CPU 1 shown in Fig. 1 executing the program stored in the DVD-ROM 15.

First, when the race mode is selected in the progress of the game, the specific horse is set (step S2). Normally, a horse entered in the race by the user is set as the specific horse. Next, when the race is started, the running commentary on race is carried out in the normal commentary mode (step S4).

A judgment is made as to whether or not the CPU 1 serving as the switching control device receives amode switching instruction to switch the mode from the normal commentary mode to the specific horse commentary mode (step S6). The input of the mode switching instruction can be judged by detecting whether or not the user pushes a specific button which is allocated to the mode switching instruction on the controller 12.

If the mode switching instruction is not input (step S6: No), a judgment is made as to whether or not the race is ended (step S8), and when the race is ended, the process is ended. If the race is not ended, the process returns to step S4, and the CPU 1 serving as the normal display output device continues the running commentary of the race in the normal commentary mode and waits for the input of the mode switching instruction.

On the other hand, when the mode switching instruction is input (step S6; Yes), the CPU 1 functions as a specific display output device and the state of the specific horse is judged by the above-mentioned method based on the position coordinate data of the target horse and the specific horses at that time (step S10). If the judgment is made that the specific horse is included in the visual field of the virtual camera (step S12; Yes), the race image is created so that the specific horse is the target horse, and the commentary voice data corresponding to "within visual field of virtual camera (State E)" is reproduced. As a result, the specific horse is displayed in the race image, and the commentary voice associated with the specific horse is reproduced.

A judgment is made as to whether or not the race is ended (step S16), and the race image and the commentary voice mainly directed to the specific horse are continuously reproduced until the race is ended.

When the judgment is made that the specific horse is not included in the visual field of the virtual camera (step S12; No) , a judgment is made as to whether the specific horse is inside or outside and preceding or behind the target horse by the above-mentioned method based on the position coordinate data of the target horse and the specific horse (step S18). The visual field of the virtual camera is moved according to the judged result and the race image is reproduced, and the corresponding commentary voice data is reproduced (step S20). Then, the process returns to step S21, and the judgment is again made as to whether the specific horse is included in the visual field of the virtual camera.

By repeating the process, the visual field of the virtual camera gradually moves to the direction of the specific horse, and eventually the specific horse is included in the visual field of the virtual camera. At the same time, the commentary voice data looking for the specific horse which is out of the visual field of the virtual camera is reproduced.

When the specific horse is included in the visual field of the virtual camera (step S12; Yes) , the race image and the commentary voice data mainly directed to the specific horse are reproduced (step S14), and when the race is ended, the process is ended.

### [Modified example]

In the above example of the race commentary process, the specific horse is a horse which is owned and entered in the race by the user, but the setting of the specific horse is not limited to this method. For example, it may be designed such that the user can select the specific horse from a list of the horses entered in the race.

In addition, while one specific horse is set in the above example, two or more specific horses can be set. In that case, the mode switching buttons are allocated to correspond to the respective specific horses on the controller 12. Namely, a certain button is allocated to a mode switching button for the specific horse commentary mode of a specific horse A, and another button is allocated to a mode switching button for the specific horse commentary mode of a specific horse B. The same process is executed on the selected specific horse according to the mode switching instruction, so that the specific horse commentary mode can be executed. Moreover, during the execution of the specific horse commentary mode on a certain specific horse, the mode can be switched into the specific horse commentary mode for another specific horse in response to the user's mode switching instruction.

In addition, the above example explained the switching example from the normal commentary mode to the specific horse commentary mode, but needless to say, the mode can be switched from the specific horse commentary mode to the normal commentary mode.

Further, in the above example, the mode switching instruction is given by the input using a specific button on the controller 12, but instead of this, a sound recognizing function for vocally recognizing previously recorded words may be incorporated in the game machine so that the mode can be switched by the voice instruction.

While the above embodiment is directed to the case where the present invention is applied to the horse racing game, the present invention is not limited to this and can be applied to various kinds of games. For example, the present invention can be applied to bicycle race which is held in a town and sports games such as basket ball and volleyball as long as image and commentary voice can be applied to these games.

As described above, according to the present invention, since the specific horse commentary mode directed mainly to a specific horse is provided in the running commentary during the race, the user can watch the state of the specific horse entered in the race by the user during the race. In the normal commentary mode, generally only the horses in the front group are displayed particularly around the goal, but according to the specific horse commentary mode, the user can mainly watch the image of the specific horse regardless of the position of the specific horse.

The invention may be embodied on other specific forms without departing from the spirit or essential characteristics thereof. The present embodiments therefore to be considered in all respects as illustrative and not restrictive, the scope of the invention being indicated by the appended claims rather than by the foregoing description and all changes which come within the meaning an range of equivalency of the claims are therefore intended to embraced therein.

The entire disclosure of Japanese Patent Application No.2002-009995 filed on January 18 , 2002 including the specification, claims, drawings and summary is incorporated herein by reference in its entirety.

## Claims

1. A game apparatus (16) which moves a plurality of mobile bodies (27) on a virtual field, displays an image according to a state of the mobile bodies on a screen of a display device (9), and outputs commentary voice according to the image, comprising:
a normal display output device (1, 4, 6) for displaying the image according to the state and outputting the commentary voice according to the state;
a specific display output device (1, 4, 6) for displaying the image centered on a specific mobile body in the plural mobile bodies and outputting the commentary voice associated with the specific mobile body; and
a switching control device (1) for selectively controlling one of the normal display output device and the specific display output device to function based on a user's input.

2. The game apparatus according to claim 1, wherein,
the image is taken by a virtual camera (21) provided on the virtual field,
the specific display output device sets the virtual camera so that the specific mobile body comes to a center, and an image of the virtual camera at that time is displayed as the image.

3. The game apparatus according to claim 2, wherein,
when the switching is made by the user's input, the specific display output device judges a positional relationship between a mobile body at the center of the image of the virtual camera and the specific mobile body and changes the image of the virtual camera based on a judged result so that the specific mobile body is positioned at the center.

4. The game apparatus according to claim 3, wherein the specific display output device outputs a message instructing the virtual camera to direct its visual field towards the specific mobile body as the commentary voice, when the judged result indicates that the specific mobile body is not included in the image of the virtual camera.

5. The game apparatus according to claim 1, wherein the specific mobile body is a mobile body which is selected by the user from the plurality of mobile bodies.

6. A game apparatus (16) which executes a race using a plurality of mobile bodies (27) on a virtual course, displays a race image according to a progressing state on a screen of a display device (9), and outputs commentary voice according to the race image, comprising:
a normal display output device (1, 4, 6) for displaying the race image according to the progressing state and outputting the commentary voice according to the progressing state;
a specific display output device (1, 4, 6) for displaying the race image centered on a specific mobile body in the plural mobile bodies and outputting the commentary voice associated with the specific mobile body; and
a switching control device (1) for selectively controlling one of the normal display output device and the specific display output device to function based on a user's input.

7. A computer program executed by a computer to function as a game apparatus (16) which moves a plurality of mobile bodies (27) on a virtual field, displays an image according to a state of the mobile bodies on a screen of a display device (9), and outputs commentary voice according to the image, comprising:
a normal display output device (1, 4, 6) for displaying the image according to the state and outputting the commentary voice according to the state;
a specific display output device (1, 4, 6) for displaying the image centered on a specific mobile body in the plural mobile bodies and outputting the commentary voice associated with the specific mobile body; and
a switching control device (1) for selectively controlling one of the normal display output device and the specific display output device to function based on a user's input.

8. The computer program according to claim 7, wherein,
the image is taken by a virtual camera (21) provided on the virtual field,
the specific display output device sets the virtual camera so that the specific mobile body comes to a center, and an image of the virtual camera at that time is displayed as the image.

9. The computer program according to claim 8, wherein,
when the switching is made by the user's input, the specific display output device judges a positional relationship between a mobile body at the center of the image of the virtual camera and the specific mobile body and changes the image of the virtual camera based on a judged result so that the specific mobile body is positioned at the center.

10. The computer program according to claim 9, wherein the specific display output device outputs a message instructing the virtual camera to direct its visual field towards the specific mobile body as the commentary voice, when the judged result indicates that the specific mobile body is not included in the image of the virtual camera.

11. The computer program according to claim 7, wherein the specific mobile body is a mobile body which is selected by the user from the plurality of mobile bodies.

12. A computer program executed by a computer to function as a game apparatus (16) which executes a race using a plurality of mobile bodies on a virtual course, displays a race image according to a progressing state on a screen of a display device (9), and outputs commentary voice according to the race image, comprising:
a normal display output device (1, 4, 6) for displaying the race image according to the progressing state and outputting the commentary voice according to the progressing state;
a specific display output device (1, 4, 6) for displaying the race image centered on a specific mobile body in the plural mobile bodies and outputting the commentary voice associated with the specific mobile body; and
a switching control device (1) for selectively controlling one of the normal display output device and the specific display output device to function based on a user's input.
